Europäisches Patentamt

European Patent Office

Office européen des brevets

(19)

(11) Numéro de publication: **0 170 754**
**B1**

(12) **FASCICULE DE BREVET EUROPEEN**

(45) Date de publication du fascicule du brevet: **26.10.88**

(51) Int. Cl.⁴: **G 01 F 15/08,** B 01 D 19/00

(21) Numéro de dépôt: **84401652.7**

(22) Date de dépôt: **08.08.84**

(54) **Bloc combiné dégazeur, purgeur, bloqueur, récupérateur pour appareil de mesure volumétrique à sécurité renforcée.**

(43) Date de publication de la demande:
**12.02.86 Bulletin 86/07**

(45) Mention de la délivrance du brevet:
**26.10.88 Bulletin 88/43**

(84) Etats contractants désignés:
**AT BE CH DE FR GB IT LI LU NL SE**

(56) Documents cités:
**EP-A-0 081 049**
**DE-B-1 228 075**
**FR-A- 284 349**
**FR-A-2 121 429**

(73) Titulaire: **EQUIPEMENT INDUSTRIEL NORMAND**
**F-14540 Grentheville près Caen (FR)**

(72) Inventeur: **Coquerel, Claude**
**8, Chemin des Coteaux**
**F-14123 Fleury S/Orne (FR)**

(74) Mandataire: **Madeuf, René Louis et al**
**Cabinet Madeuf 3, Avenue Bugeaud**
**F-75116 Paris (FR)**

Courier Press, Leamington Spa, England.

EP 0 170 754 B1

# Description

La présente invention a pour objet un bloc combiné dégazeur, purgeur, bloqueur, récupérateur pour appareil de mesure volumétrique et en particulier pour les installations de pompage de carburants, ces derniers étant distribués volumétriquement au client, en particulier dans les stations-service et les garages.

Ces pompes automatiques de distribution de carburants sont soumises à une réglementation très sévère et, selon les textes en vigueur, "les ensembles de mesurage doivent être installés de telle sorte qu'il ne se produise normalement en amont du compteur ni entrée d'air, ni dégagement de gaz dans le liquide".

On doit donc équiper systématiquement les distributeurs de carburants de dispositif de dégazage permettant l'élimination correcte de l'air et des gaz non dissous et éventuellement contenus dans le liquide avant son passage dans le compteur afin d'exiger de celui-ci une qualité de précision commerciale.

Jusqu'à présent, il existait surtout deux techniques hydrauliques, pour les systèmes à précision commerciale, qu'admettait l'Administration chargée du contrôle des instruments de mesure:

a) les unités de distribution ou distributeurs de carburants fonctionnant en aspiration avec groupe électropompe incorporé,

b) les unités de distribution ou distributeurs de carburants fonctionnant en refoulement par des pompes immergées.

Or, il fallait de ce fait des installations compliquées, délicates, coûteuses et sujettes évidemment à des pannes.

C'est le cas en particulier du dispositif décrit dans le CH-A-284 349 qui se compose de deux ensembles distincts

d'une part, une cuve de dégazage (1),

d'autre part, un purgeur d'air (16) d'où un encombrement important. De plus, le purgeur doit être placé impérativement au-dessus du niveau supérieur de la chambre mesurante du compteur (17) de façon à ce que celui-ci soit toujours en charge. Il va de soi que lors de la mise en fonctionnement de l'appareil, pour une première utilisation, ou une intervention pour réparation du compteur qui se vide alors de son contenu, l'appareil placé en amont, ne permet pas l'interdiction de passage d'air dans le compteur.

De plus, entre la cuve du séparateur récupérateur et le purgeur, il faut deux tubulures.

La présente invention remédie à ces inconvénients en créant un bloc dégazeur, purgeur, bloqueur, récupérateur pour appareil de mesure volumétrique, qui intègre les fonctions mentionées ci-dessus pouvant être exploitées avec un groupe électropompe ou avec des pompes immergées et ce, sans nécessiter une quelconque modification.

Conformément à l'invention, le bloc est constitué par un corps principal recevant à sa partie supérieure une cuve de récupération et à sa partie inférieure une cuve de dégazage, ce bloc central, relié par une tuyauterie au côte de refoulement de la pompe, met encommunication la cuve de dégazage par un canal et un filtre avec la sortie vers le mesureur par l'intermédiaire d'un tube plongeur de refoulement dont l'ouverture et la fermeture sont contrôlées par une vanne électromagnétique à verrous, le fonctionnement de cette vanne étant soumis à un dispositif interrupteur commandé par un premier flotteur guidé verticalement par une tige placée dans la cuve de dégazage, le flotteur contrôlant le passage d'un canal faisant communiquer la cuve de dégazage avec la cuve de récupération, elle-même soumise par l'intermédiaire dun deuxième flotteur guidé par une tige à une canalisation d'échappement pour le retour des mousses vers l'aspiration de la pompe avec interposition d'un clapet antiretour.

Suivant une autre caractéristique de l'invention le premier flotteur commandant le canal est muni d'une ferrite qui, par l'intermédiaire de contacts de proximité, provoque la fermeture ou l'ouverture du dispositif interrupteur.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une coupe-élévation passant par le centre du bloc combiné de l'invention.

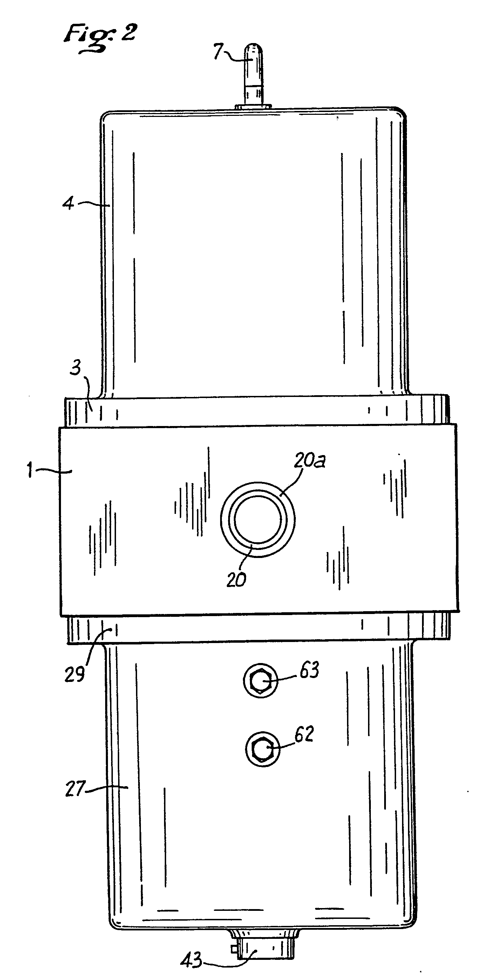

La fig. 2 est une élévation en vue extérieure du dispositif de l'invention.

Sur le dessin, on voit un corps principal 1, de forme sensiblement parallélépipèdique rectangle, à la partie supérieure duquel est prévue une gorge circulaire 2 destinée à recevoir la couronne 3 d'une cuve de récupération 4 fermée à sa partie supérieure par un fond 5 percé d'un trou 6 dans lequel pénètre le bras 7a d'une tubulure 7 de mise à l'atmosphère.

Il est prévu, également sur la tubulure 7, un sifflet 8 dont le rôle sera mentionné plus loin.

Bien entendu, des joints appropriés 9 sont placés entre le bas de la couronne 3 et la gorge circulaire 2 du corps principal 1 pour assurer dans cette zone une parfaite étanchéité.

Le fond 5 de la cuve de récupération 4 porte intérieurement un bossage 10 destiné à maintenir une tige 11 disposée parallèlement à l'axe central $X, X_1, X_2$ de la cuve de récupération 4 et sur lequel se déplace normalement un flotteur 12. Le pied inférieur de la tige 11 est fixé sur un siège 13 sur lequel repose la partie inférieure conique 12a du flotteur 12 puisque la surface supérieure du siège 13 est évidée et forme ainsi une cuvette légèrement conique 13a.

Le siège 13 est percé de trous 14 qui débouchent dans une chambre 15 percée dans le corps principal 1. La chambre 15 est reliée, par un canal 16, à un clapet anti-retour 17 débouchant dans une canalisation 18 qui permet le retour des mousses vers la partie d'aspiration de la pompe coopérant avec le bloc combiné.

Comme cela est très visible au dessin, le corps principal 1 est percé le long de son axe horizontal

Y-Y$_1$ d'un canal 19 relié au côté refoulement de la pompe par une tuyauterie 20 dont l'extrémité 20a est convenablement fixée sur le corps principal 1 avec incorporation de moyens normaux d'étanchéité.

Le canal 19 débouche dans une chambre 21 sensiblement placée au centre du corps principal 1, chambre en communication par un canal 22 percé concentriquement à l'axe vertical X, X$_1$, X$_2$ du corps principal 1, un filtre conique 23 placé juste à la sortie du corps principal 1 dans un diffuseur-séparateur de gaz 23 qui repose par un pied 24 sur un bouchon 25 fermant un trou 26 d'une cuve de dégazage 27 solidaire du corps principal 1 et disposée symétriquement à la cuve de récupération 4 par rapport à l'axe horizontal Y-Y$_1$.

Un tube plongeur de refoulement 28 est placé dans la cuve de dégazage 27 qui est cylindrique comme la cuve de récupération 4 et qui comporte également une couronne 29 permettant sa jonction avec le corps principal 1 ainsi qu'un viseur 64 et une vanne de purge 65 scellés ou pas par un dispositif de plombage. Le tube plongeur 28, qui est placé latéralement dans la cuve de dégazage 27, aboutit à un canal 30 percé dans le corps principal 1. Ce canal 30 peut être fermé par une vanne électromagnétique 31 à deux positions, c'est-à-dire que le verrou 32 peut occuper trois positions laissant le canal 30 soit complètement ouvert, soit à demi-fermé, soit complètement fermé. Ce canal 30 aboutit, dans le corps principal 1, dans un canal horizontal 33 qui débouche dans une canalisation 34 reliant le bloc combiné à l'appareil mesureur du volume de liquide débité.

Par mesure de précision, il est indiqué ici que le bouchon 25 portant le pied 24 ferme le trou 26 percé dans le fond 27a de la cuve de dégazage. Ce fond 27a est percé également d'un deuxième trou 40 à rebord 41 qui est fermé par une plaque 42 portant extérieurement un dispositif interrupteur 43 en liaison électrique avec la vanne électromagnétique 31.

La plaque 42 porte en son centre une tige 44 dans laquelle est intégré un contact à lame sensible 45 qui coopère avec une ferrite 46 insérée dans un flotteur 47 centré sur la partie supérieure de la tige 44.

Le flotteur 47 est protégé par un tube 48 concentrique à la tige 44 et qui est fixé sur la face inférieure du corps principal 1 devant un siège 49 destiné à recevoir la partie supérieure conique 47a du flotteur 47 et de ce fait, ferme un canal 50 reliant, à travers le corps principal 1, la cuve de dégazage à la cuve de récupération.

Parallèlement au canal 50 est prévu un canal calibré de fuite permanente 51 afin d'équilibrer rapidement les différences de pression pouvant régner dans la cuve de dégazage et la cuve de récupération.

Finalement, il est prévu à la partie supérieure de la chambre 21, un canal de petit diamètre 53 qui peut déboucher à la partie inférieure de la cuve de récupération 4 par l'intermédiaire d'une soupape tarée 54.

Comme cela ressort de la description ci-dessus, le bloc combiné est relié par la tuyauterie 20 au côté refoulement de la pompe et, par la canalisation 18, vers l'aspiration de la pompe.

Finalement, la canalisation 34 est reliée au bloc à l'appareil mesureur permettant de vérifier les quantités débitées et commandant le plus souvent un intégrateur calculateur donnant le prix de la quantité de produit débité à partir d'un prix unitaire.

Le dispositif fonctionne de la façon suivante.

Au repos, les cuves de récupération 4 et de dégazage 27 sont vides, le flotteur 47 est en position basse libérant le siège 49 et, de ce fait, le canal 50 est libre.

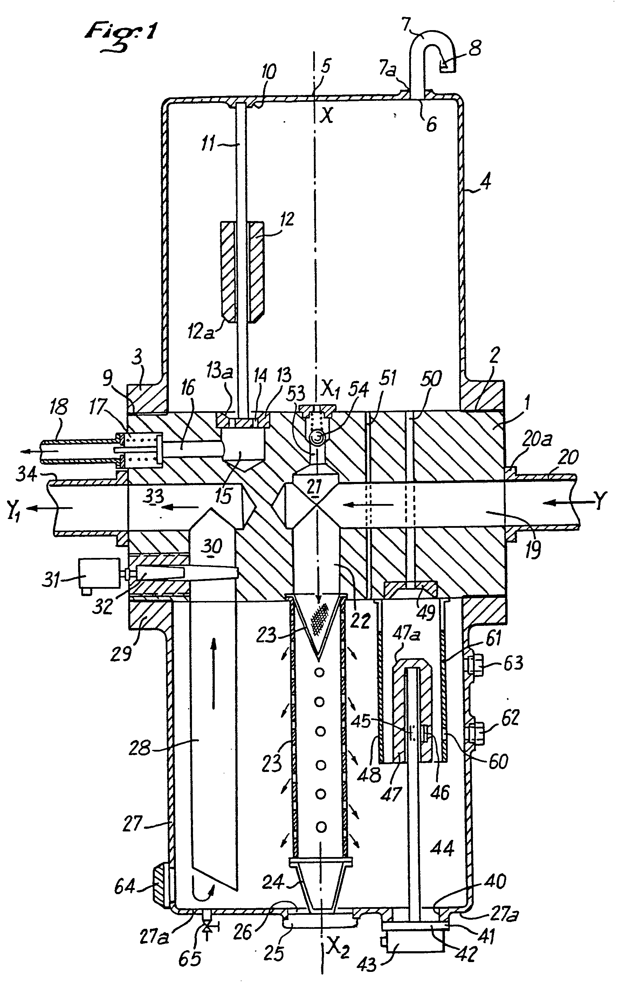

La ferrite 46 est dans une position représentée à la fig. 1. Par les trous 60, 61 percés dans le tube 48 de protection du flotteur 47, les sondes de proximité 62, 63 contrôlent l'état du flotteur niveau bas (sonde 62) tandis que la sonde 63 contrôlera, à travers le trou 61, la position haute du flotteur 47 à l'aide de la ferrite 46.

De même, le flotteur 12 repose sur le siège 13 obturant la chambre 15 et le canal 16. La soupape tarée 54 est fermée, la vanne électromagnétique 31 est fermée et, de ce fait, le tube plongeur 28 de refoulement est séparé du canal 33.

Dans le cas où à l'aide d'un pistolet de pompe électrique on débite une certaine quantité de liquide, il se produit les faits suivants.

La manipulation du pistolet entraîne immédiatement l'alimentation du groupe moteur de la pompe qui refoule rapidement, lorsque l'utilisateur le désire, le liquide depuis la pompe vers le bloc combiné dégazeur, purgeur, bloqueur, récupérateur.

La pompe refoule ce liquide à une pression P et ce liquide remplit la cuve de dégazage 27 en soulevant ainsi le flotteur 47 qui arrive rapidement sur son siège 49 en obturant le canal 50 ce qui empêche toute communication vers la cuve de récupération 4. De même, le flotteur 47, étant en position haute, libère le contact à lame sensible 45, le dispositif interrupteur 43 alimente alors la vanne électromagnétique 31 qui ouvre le tube plongeur de refoulement 28 et, par le canal 33 et la canalisation 31, le liquide s'échappe vers le mesureur.

Ce liquide est refoulé à la pression P.

Si, pour une raison quelconque, la pompe aspire un mélange d'air et de liquide, le gaz et les mousses s'accumulent rapidement à la partie supérieure de la cuve de dégazage 27 ce qui provoque un refoulement vers le bas du flotteur 47 qui, en s'abaissant, libère le canal 50.

Le gaz est évacué à travers la cuve de récupération 4 vers la tubulure 7 de mise à l'atmosphère. L'émulsion passe également par le canal 50, soulève le flotteur 12 et le liquide, ainsi accumulé dans la chambre de récupération 4, est recyclé à travers le canal 16, le clapet anti-retour et la caanalisation 18, vers la canalisation d'aspiration de la pompe.

Si, au cours d'un accident, un volume d'air trop important est introduit dans le circuit, le flotteur 47 s'abaisse et la ferrite coupe le contact avec la lamesensible 46 qui provoque, par l'intermédiaire du dispositif 43, la fermeture instantanée de la vanne électromagnétique 31, le verrou 32 bloque à ce moment le tube plongeur de refoulement 28. Lorsque la proportion acceptable liquide/air refoulé est rétablie, le flotteur 47 remonte, dégage le contact à lame souple 45 activant le dispositif interrupteur 43 et excitant la vanne électromagnétique dont le verrou 32 reprend une position ouverte.

Il est précisé ici que l'on utilise très souvent une vanne électromagnétique à double position permettant ainsi deux vitesses d'écoulement du liquide (verrou 32 complètement ouvert grand écoulement et verrou 32 en partie ouvert petit écoulement).

Le bloc combiné dégazeur est conçu pour un débit de quelques mètre cubes par heure à plusieurs centaines de mètres cubes par heure suivant les dimensions des éléments constituants.

Il assure les deux fonctions dégazeur purgeur tout en étant compact et, de ce fait, apporte une amélioration notoire à l'efficacité du dégazage des fluides soumis à la précision commerciale, notamment par la fonction de blocage qui correspond à un détecteur de fuite interdisant toute utilisation du distributeur et évitant pollution et perte de produit.

Le sifflet 8, placé sur la tubulure de mise à l'atmosphère 7, est dit "signal sonore de sécurité" et ne fonctionne que lors d'une entrée d'air importante et anormale.

Les sondes de proximité 62, 63, définissant le niveau bas et le niveau haut du flotteur 47, permettent la mise en service ou l'arrêt de l'unité de distribution soit en coupant automatiquement l'alimentation électrique du moteur de la pompe, soit en provoquant la fermeture brusque du verrou 32 de la vanne électromagnétique 31 avec, ensuite, arrêt de l'alimentation de la pompe évitant ainsi les risques de perte de carburant et en même temps leurs conséquences qui peuvent être extrêmement graves.

**Revendications**

1. Bloc combiné dégazeur, purgeur, bloqueur, récupérateur pour appareil de mesure volumétrique à sécurité renforcée, qui est constitué par un corps principal (1) recevant à sa partie supérieure une cuve de récupération (4) et à sa partie inférieure une cuve de dégazage (27), ce bloc central, relié par une tuyauterie (20) au côté de refoulement, de la pompe, met en communication la cuve de dégazage (27) par un canal (22) et un filtre (23) avec la sortie (33) vers le mesureur par l'intermédiaire d'un tube plongeur de refoulement (28) caractérisé en ce que l'ouverture et la fermeture du tube plongeur sont contrôlées par une vanne électromagnétique (31) à verrous (32), le fonctionnement de cette vanne étant soumis à un dispositif interrupteur (43) commandé par un premier flotteur (47) guidé verticalement par une tige (44) placée dans la cuve de dégazage, le flotteur (47) contrôlant le passage d'un canal (50) faisant communiquer la cuve de dégazage avec la cuve de récupération, elle-même soumise par l'intermédiaire d'un deuxième flotteur (12) guidé par une tige (11) à une canalisation d'échappement (18) pour le retour des mousses vers l'aspiration de la pompe avec interposition d'un clapet anti-retour (17).

2. Bloc combiné suivant la revendication 1, caractérisé en ce que le premier flotteur (47), commandant le canal (50) est muni d'une ferrite (46) qui, par l'intermédiaire de contacts de proximité (60, 61), provoque la fermeture ou l'ouverture du dispositif interrupteur (43).

3. Bloc combiné suivant la revendication 1, caractérisé en ce qu'une soupape tarée (54) permet l'échappement, vers la cuve de récupération (4), d'une surpression pouvant être mise à l'atmosphère par l'intermédiaire d'une tubulure (7) placée à la partie supérieure de la cuve de récupération (4).

4. Bloc combiné suivant la revendication 1, caractérise en ce qu'un viseur (64) permet d'apprécier la présence d'eau dans la cuve de dégazeur et d'en assurer l'élimination par le robinet (65).

5. Bloc combiné suivant la revendication 1, caractérisé en ce que cet ensemble de sécurité fait office de détecteur de fuite sur la tuyauterie d'aspiration ou l'absence de produit dans le réservoir de stockage.

**Patentansprüche**

1. Entgaser, Filter- Absperr- und Rückführkombination für volumetrisches Messgerät mit verstärkter Sicherheit, die aus einem Hauptkörper (1) besteht, der auf seiner Oberseite eine Rückführkammer (4) und auf seiner, Unterseite eine Entgasungskammer (27) aufnimmt, wobei dieser zentrale Block, der durch eine Rohrleitung (20) mit der Förderseite der Pumpe verbunden ist, die Entgasungskammer (27) über einen Kanal (22) und ein Filter (23) mit dem Auslass (33) in Richtung des Messgeräts über ein Druck-Tauschrohr (28) verbindet, dadurch gekennzeichnet, dass das Offnen und das Schliessen des Tauschrohres durch ein elektromagnetisches, mit Riegeln (32) versehenes Sperrventil, (31) gesteuert wird, wobei die Funktion dieses Ventils über eine Unterbrechervorrichtung (43) erfolgt, die durch einen ersten Schwimmer (47) gesteuert wird, der vertikal auf einer Stange (44) in der Entgasungskammer geführt ist, wobei der Schwimmer (47) den Durchlass eines Kanals (50) steuert, der die Entgasungskammer mit der Rückführkammer verbindet, die ihrerseits über einen zweiten, auf einer Stange (11) geführten Schwimmer (12) gesteuert mit einem Auslass (18) verbunden ist, um Schaum unter Zwischenordnung einer Rückschlagklappe (17) zur Ansaugseite der Pumpe zurückzuführen.

2. Kombination nach Anspruch 1, dadurch gekennzeichnet, dass der erste, den Kanal (50) steuernde Schwimmer (47) mit einem Ferrit (46) versehen ist, der über Näherungskontakte (60, 61) das Schliessen oder Offnen der Unterbrechervorrichtung (43) und damit des elektromagnetischen Ventils (31) bewirkt.

3. Kombination nach Anspruch 1, dadurch gekennzeichnet, dass ein Tarierventil (54) über die Rückführkammer (4) den Ausgleich eines Uberdrucks ermöglicht, der mit der Aussenatmosphäre über einen Stutzen (7) ausgelassen werden kann, der im oberen Teil der Rückführkammer (4) angeordnet ist.

4. Kombination nach Anspruch 1, dadurch gekennzeichnet, dass ein Schauglas (64) es ermöglicht, die Anwesenheit von Wasser in der Entgasungskammer festzustellen und dessen Beseitigung über einen Wasserablasshahn (65) zu bewirken.

5. Kombination nach Anspruch 1, dadurch gekennzeichnet, dass diese Sicherheitsvorrichtung als eine Detektorvorrichtung es ermöglicht, Lecks in der Ansaugleitung oder das Fehlen des zu fördernden Stoffes im Vorratstank festzustellen.

**Claims**

1. Degasing, cleaning, blocking and recuperating combined unit with enhanced security for volumetric measuring apparatus, which is formed of a main body (1) receiving at its upper portion a recuperation tank (4) and at its lower portion a degasing tank (27), this central unit, connected by a piping (20) to the delivery side of the pump, communicates the degasing tank (27), via a channel (22) and a filter (23), with the outlet (33) toward the measuring apparatus via a delivery plunger tube (28), characterized in that the opening and closing of the plunger tube are controlled by an electro-magnetic valve (31) with latches (32), the operation of this valve is subjected to a switching device (43) controlled by a first float (47) vertically guided by a rod (44) placed in the degasing tank, this float (47) controlling the passage of a channel (50) communicating the degasing tank with the recuperation tank, which is in turn subjected via a second float (12) guided by a rod (11) to a discharge canalization (18) for the return of the foams to the suction side of the pump, with interposition of a nonreturn valve (17).

2. Combined unit according to claim 1, characterized in that the first float (47) controlling the channel (50) is provided with a ferrite (46) which, via proximity contacts (60, 61), causes the closing or opening of the switching device (43).

3. Combined unit according to claim 1, characterized in that a calibrated valve (54) allows the release, toward the recuperation tank (4), of an overpressure which can be discharged in the atmosphere via a tubing (7) placed at the upper portion of the recuperation tank (4).

4. Combined unit according to claim 1, characterized in that a sighting device (64) allows appreciating the presence of water in the tank of the degasser and discharging it via the tap (65).

5. Combined unit according to claim 1, characterized in that this safety assembly plays the part of a leakage detector on the suction piping, or the absence of-product in the storage tank.

Fig. 1

*Fig. 2*